# EUROPÄISCHE PATENTSCHRIFT

(11) **EP 3 051 097 B1**
(45) Veröffentlichungstag und Bekanntmachung des Hinweises auf die Patenterteilung: **21.08.2019**
(21) Anmeldenummer: 15003587.1
(22) Anmeldetag: 16.12.2015
(51) Int. Cl.: F02B 37/10, F02B 37/14, F02B 39/10, F02D 9/06, F02D 41/12, F02D 9/08, F02D 41/00

(54) **MOTORBREMSVERFAHREN FÜR EINE AUFGELADENE BRENNKRAFTMASCHINE UND VORRICHTUNG ZUR MODULATION EINER MOTORBREMSLEISTUNG EINES KRAFTFAHRZEUGS MIT AUFGELADENER BRENNKRAFTMASCHINE**
MOTOR BRAKING METHOD FOR A CHARGED COMBUSTION ENGINE AND DEVICE FOR MODULATING MOTOR BRAKE POWER OF A MOTOR VEHICLE WITH CHARGED COMBUSTION ENGINE
PROCÉDÉ DE FREINAGE DE MOTEUR POUR UN MOTEUR À COMBUSTION INTERNE SURALIMENTÉ ET DISPOSITIF DE MODULATION D'UNE PUISSANCE DE FREINAGE DE MOTEUR D'UN VÉHICULE AUTOMOBILE COMPRENANT UN MOTEUR À COMBUSTION INTERNE SURALIMENTÉ

(30) Priorität: 28.01.2015 DE 102015001081
(43) Veröffentlichungstag der Anmeldung: 03.08.2016
(73) Patentinhaber: MAN Truck & Bus SE, 80995 München (DE)
(72) Erfinder: Pappenheimer, Andreas, 90431 Nürnberg (DE); Sommermann, Andreas, 91560 Heilsbronn (DE)
(74) Vertreter: v. Bezold & Partner Patentanwälte - PartG mbB

(56) Entgegenhaltungen:
- EP-A1- 0 791 735
- EP-A1- 2 634 405
- EP-A2- 0 210 833

## Beschreibung

### Beschreibung

Die Erfindung betrifft ein Motorbremsverfahren für eine aufgeladene Brennkraftmaschine mit einem Abgasturbolader. Die Erfindung betrifft ferner eine Vorrichtung zur Modulation einer Motorbremsleistung eines Kraftfahrzeugs mit aufgeladener Brennkraftmaschine.

Aus dem Stand der Technik, z. B. den Offenlegungsschriften DE 198 21 130 A1 oder EP 1 258 603 A1, ist bekannt, Kraftfahrzeuge, insbesondere Nutzfahrzeuge, mit einer Motorbremse in Form einer Motorstaubremse (auch Auspuffklappenbremse oder Motorstauklappe genannt) auszurüsten. Bei einer Motorstaubremse werden die Abgase durch eine in der Abgasleitung eingebaute Drosselklappe aufgestaut, die vor oder typischerweise nach dem Abgasturbolader angeordnet ist, wobei der Staudruck durch die Drosselklappe im Abgastrakt aufgebaut wird. Der Motor verrichtet beim Ausschieben der Zylinderladung gegen diesen Staudruck in der Abgasleitung zusätzliche Arbeit. Die Motorstauklappe wird vom Fahrer im Schubbetrieb bei Bedarf per Druckluft eingeschaltet. Gegen den von der Motorstauklappe erzeugten Gegendruck muss jeder einzelne Zylinder eines Viertaktmotors jeweils im vierten Arbeitstakt ausschieben. Rollt das Fahrzeug im Gefälle, kann zur Steigerung der Motorbremsleistung die Motorbremse aktiviert werden. Zur Regelung der Bremsleistung kann zusätzlich der Anstellwinkel der Motorstauklappe verändert werden. Bei derartigen aus der Praxis bekannten Motorstaubremsen kann der Fahrer die Bremsleistung in Stufen vorwählen, oder der Bremstempomat regelt auf eine Sollgeschwindigkeit ein. Nachteilig an derartigen Motorbremsen ist, dass durch die Variation des Anstellwinkels der Motorstauklappe keine sehr genaue Modulation der Motorbremsleistung erzielbar ist und dass die maximal erzielbare Motorbremskraft konstruktionsbedingt begrenzt ist.

Aus dem Stand der Technik sind weitere Arten von Motorbremsverfahren bekannt. So offenbart die DE 198 53 127 A1 ein Motorbremsverfahren für eine aufgeladene Brennkraftmaschine, bei dem im Motorbremsbetrieb den Zylindern erwärmte Verbrennungsluft zugeführt wird, wobei zumindest ein Teil der verdichteten Verbrennungsluft am Ladeluftkühler vorbei geführt wird.

Die DE 10 2005 008 657 A1 offenbart ein Motorbremsverfahren für eine Brennkraftmaschine mit zwei in Reihe geschalteten Abgasturboladern mit unveränderlichem Turbineneintrittsquerschnitt, wobei zur Einstellung der gewünschten bzw. angeforderten Motorbremsleistung der durch einen den motornahen Verdichter überbrückenden Bypass geführte Luftmassenstrom und der durch einen die motornahe Abgasturbine überbrückenden Bypass geführte Abgasmassenstrom reguliert werden.

Aus der DE 43 30 487 C1 und der DE19543190 A1 sind weitere Motorbremsverfahren für eine aufgeladene Brennkraftmaschine mit einem Abgasturbolader bekannt. In der Ringdüse des Abgasturboladers ist ein variables Leitgitter mit Leitschaufeln angeordnet, mit dem über eine Leitgitterverstelleinrichtung der Strömungsquerschnitt der Ringdüse zur Herstellung eines gewünschten Staudrucks im Strömungskanal eingestellt wird.

Die DE 198 44 573 A1 offenbart ein Motorbremsverfahren für eine aufgeladene Brennkraftmaschine, die einen Abgasturbolader mit einer Turbine mit variabler Turbinengeometrie aufweist. Um das Verhalten der Motorbremse mit einfachen Maßnahmen so zu beeinflussen, dass eine an unterschiedliche Situationen angepasste Bremsung möglich ist, wird im Motorbremsbetrieb die variable Turbinengeometrie zwischen einer vorgebbaren harten Brems-Einstellung und einer vorgebbaren weichen Bremseinstellung verstellt.

Die EP 2 634 405 A1, die EP 0 791 735 A1 und die EP 0 210 833 A2 offenbaren jeweils aufgeladene Brennkraftmaschinen, wobei der Abgasturbolader zusätzlich unter vorbestimmten Bedingungen von einer elektrischen Maschine antreibbar ist.

Nachteilig an derartigen Motorbremsverfahren ist, dass diese zusätzliche Bypasselemente oder Anpassungen des Abgasturboladers (variable Turbinengeometrie oder variables Leitgitter) erfordern. Die Modulation der Motorbremsleistung ist ebenfalls nicht in der gewünschten Genauigkeit möglich.

Es ist somit eine Aufgabe der Erfindung, ein verbessertes Motorbremsverfahren bereitzustellen, mit dem Nachteile herkömmlicher Techniken vermieden werden können. Die Aufgabe der Erfindung ist es insbesondere, ein Motorbremsverfahren herzustellen, das im Vergleich zu herkömmlichen Ansätzen eine genauere Modulation der Motorbremsleistung und eine höhere Motorbremsleistung ermöglicht. Eine weitere Aufgabe ist es, eine Vorrichtung zur Modulation einer Motorbremsleistung eines Kraftfahrzeugs mit aufgeladener Brennkraftmaschine bereitzustellen, mit der Nachteile herkömmlicher Vorrichtungen vermieden werden können.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen.

Es wird ein Motorbremsverfahren für eine aufgeladene Brennkraftmaschine mit einem Abgasturbolader vorgeschlagen. Erfindungsgemäß ist der Abgasturbolader als ein elektromotorisch betreibbarer bzw. elektromotorisch unterstützter Abgasturbolader, auch als elektrifizierter Abgasturbolader bezeichnet, ausgeführt. Der elektromotorisch unterstützte Abgasturbolader weist eine elektrische Maschine auf, die drehmomentübertragend mit der Antriebswelle des Abgasturboladers oder allgemein dem Läufer koppelbar bzw. gekoppelt ist. Die elektrische Maschine ist zum Antrieb bzw. zur Antriebsunterstützung des Abgasturboladers vorgesehen (nachfolgend auch als elektromotorischer Betrieb des Abgasturboladers bezeichnet) und/oder kann vom Abgasturbolader generatorisch betrieben werden. Der Läufer des Abgasturboladers ist aus der Abgasturbine, dem Verdichter und der Antriebswelle gebildet, wobei die Abgasturbine und der Verdichter über die Antriebswelle bewegungsgekoppelt sind. Aus der Praxis ist bereits bekannt, mit dem Elektromotor eines elektromotorisch unterstützten Abgasturboladers den Aufladeprozess der Brennkraftmaschine temporär zu unterstützen, insbesondere zur Überbrückung des sogenannten Turbolochs beim Anfahren.

Gemäß allgemeinen Gesichtspunkten der Erfindung wird der elektrisch unterstützte Abgasturbolader im Motorbremsbetrieb, d. h. insbesondere im Schubbetrieb des Fahrzeugs, zur Einstellung der gewünschten bzw. angeforderten Motorbremsleistung genutzt. Die Motorbremsleistungsanforderung wird von einem im Fahrerhaus angeordneten Betätigungselement erzeugt, mit dem der Fahrer im Motorbremsbetrieb die Bremsleistung in Stufen vorwählen kann und/ oder vom einem Brems-Tempomaten erzeugt, der das Fahrzeug auf eine Sollgeschwindigkeit regelt. Hierbei erfolgt die Einstellung der gewünschten bzw. angeforderten Motorbremsleistung durch Beschleunigung des Läufers des Abgasturboladers durch elektromotorischen Betrieb des Abgasturboladers und/oder durch Abbremsen des Läufers durch generatorischen Betrieb des Abgasturboladers. Im generatorischen Betrieb wird die Bewegungsenergie des Läufers genutzt, um die elektrische Maschine anzutreiben. Dadurch kann die gewünschte Motorbremsleistung schnell und mit hoher Genauigkeit aufgebaut werden.

Gemäß einer ersten Maßnahme wird der Läufer des Abgasturboladers durch elektromotorischen Betrieb des Abgasturboladers beschleunigt, falls eine gewünschte bzw. angeforderte Motorbremsleistung einen vorbestimmten ersten Schwellenwert überschreitet. Dieser Schwellenwert kann beispielsweise die maximale Motorbremsleistung angeben, die im Schubbetrieb ohne Betrieb der elektrischen Maschine des Abgasturboladers und ggf. unter Verwendung einer Motorstauklappe erzeugt werden kann. Der elektromotorische Betrieb erhöht den Ladedruck in den Zylindern der Brennkraftmaschine und dadurch die vom Motor im Schubbetrieb zu verrichtende Arbeit und Motorbremsleistung.

Gemäß einer zweiten Maßnahme wird der Läufer durch generatorischen Betrieb des Abgasturboladers abgebremst, falls eine gewünschte bzw. angeforderte Motorbremsleistung einen vorbestimmten zweiten Schwellenwert unterschreitet. Der zweite Schwellenwert kann beispielsweise die Motorbremsleistung angeben, die im Schubbetrieb ohne Betrieb der elektrischen Maschine des Abgasturboladers erzeugt wird, oder kann bei Verwendung einer Motorstauklappe die minimale Motorbremsleistung angeben, die bei nicht aktivierter Stauklappe im Schubbetrieb ohne Betrieb der elektrischen Maschine des Abgasturboladers erzeugt werden kann. Durch den generatorischen Betrieb des Abgasturboladers kann die Motorbremsleistung weiter reduziert werden, um z. B. ein Herunterrollen eines leichten Gefälles im Schubbetrieb zu ermöglichen.

Gemäß einem bevorzugten Ausführungsbeispiel kann ein definierter Aufbau einer Motorbremsleistung durch eine entsprechende Ansteuerung des elektromotorischen Betriebs des Abgasturboladers gesteuert werden. Mit anderen Worten kann durch Ansteuerung der elektrischen Maschine die Ladedrehzahl des Verdichters so geregelt werden, dass sich die gewünschte Motorbremsleistung und/oder der gewünschte Verlauf der Motorbremsleistung einstellt. Hierdurch kann die gewünschte Motorbremsleistung einerseits in einer kurzen Zeit und andererseits mit hoher Genauigkeit aufgebaut und moduliert werden. Beispielsweise kann eine Stärke des elektromotorischen Betriebs des Abgasturboladers in Abhängigkeit von einer aktuell angeforderten Motorbremsleistung, vorzugsweise proportional zur angeforderten Motorbremsleistung, variiert werden, falls diese den vorbestimmten ersten Schwellenwert überschreitet.

Durch die Verwendung eines elektromotorisch unterstützten Abgasturboladers zur Einstellung der angeforderten Motorbremsleistung kann optional auf die aus dem Stand der Technik bekannten konstruktiven Maßnahmen (variable Turbinengeometrie, Motorstauklappe etc.) verzichtet werden. Es besteht jedoch auch die Möglichkeit, den elektromotorisch unterstützten Abgasturbolader zusammen mit den aus dem Stand der Technik bekannten Ansätzen zur Modulation der Motorbremsleistung zu verwenden.

Eine besonders vorteilhafte Ausführungsform sieht hierbei vor, im Abgasstrang eine Motorstauklappe anzuordnen, die im Motorbremsbetrieb aktiviert wird, wobei zur Einstellung einer gewünschten bzw. angeforderte Motorbremsleistung ferner ein Anstellwinkel der Motorstauklappe festgelegt wird.

Ein besonderer Vorzug dieser Ausführungsvarianten liegt darin, dass die durch die Motorstauklappe bewirkte Motorbremsleistung durch einen Antrieb des Läufers mittels eines motorisehen Betriebs des Abgasturboladers zusätzlich erhöht werden kann, z. B. bei starken Gefällestrecken, und/oder zusätzlich durch einen generatorischen Betrieb des Abgasturboladers reduziert werden kann, z. B. bei Strecken mit leichtem Gefälle. Ferner kann durch die Variation sowohl des Anstellwinkels als auch der Beschleunigung bzw. Abbremsung des Läufers durch die elektrische Maschine eine besonders flexible und feinstufige Modulation der Motorbremsleistung erzielt werden.

Gemäß einem weiteren Ausführungsbeispiel wird Motorbremsenergie in Form von elektrischer Energie teilweise rekuperiert, indem die beim Abbremsen des Läufers durch generatorischen Betrieb der elektrischen Maschine des Abgasturboladers rekuperierte elektrische Energie in ein Fahrzeugbordnetz und/oder einen elektrischen Energiespeicher des Fahrzeugs eingespeist wird.

Gemäß einem weiteren Gesichtspunkt der Erfindung wird eine Vorrichtung zur Modulation einer Motorbremsleistung eines Kraftfahrzeugs mit aufgeladener Brennkraftmaschine bereitgestellt. Die Vorrichtung ist insbesondere eine Steuervorrichtung der elektrischen Maschine des Abgasturboladers, die durch Ansteuern der elektrischen Maschine die Ladedrehzahl des Abgasturboladers steuern und/oder regeln kann. Die Vorrichtung ist eingerichtet, eine Motorbremsleistungsanforderung zu empfangen. Die Motorbremsleistungsanforderung wird von einem im Fahrerhaus angeordneten Betätigungselement erzeugt, mit dem der Fahrer im Motorbremsbetrieb die Bremsleistung in Stufen vorwählen kann und/oder vom einem Brems-Tempomaten erzeugt, der das Fahrzeug auf eine Sollgeschwindigkeit regelt. Die Vorrichtung ist ferner eingerichtet, im Motorbremsbetrieb zum Aufbau der angeforderten Bremsleistung in Abhängigkeit von der empfangenen Bremsleistungsanforderung durch einen elektromotorisch unterstützten Betrieb des Abgasturboladers den Läufer des Abgasturboladers zu beschleunigen und/oder durch einen generatorischen Betrieb des Abgasturboladers dessen Läufer abzubremsen. Die Vorrichtung ist insbesondere ausgeführt, das Verfahren wie hierin offenbart durchzuführen. Die Vorrichtung kann ferner eingerichtet sein, eine Motorstauklappe anzusteuern, um diese im Motorbremsbetrieb zu aktivieren und/oder einen Anstellwinkel der Motorstauklappe einzustellen. Zur Vermeidung von Wiederholungen sollen rein verfahrensgemäß offenbarte Merkmale auch als vorrichtungsgemäß offenbart gelten und beanspruchbar sein.

Ferner betrifft die Erfindung ein Kraftfahrzeug, insbesondere Nutzfahrzeug, aufweisend einen elektromotorisch unterstützten Abgasturbolader und eine Vorrichtung zur Modulation einer Motorbremsleistung des Kraftfahrzeugs, wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild zur Illustration einer Motorbremsvorrichtung gemäß einer Ausführungsform der Erfindung;
- Figur 2: ein Ablaufdiagramm eines Motorbremsverfahrens gemäß einer Ausführungsform der Erfindung;
- Figur 3: den Verlauf der Drehzahl des Abgasturboladers im Motorbremsbetrieb gemäß einer Ausführungsform der Erfindung; und
- Figur 4: ein Motorbetriebskennfeld zur Illustration der Betriebspunkte im Motorbremsbetrieb.

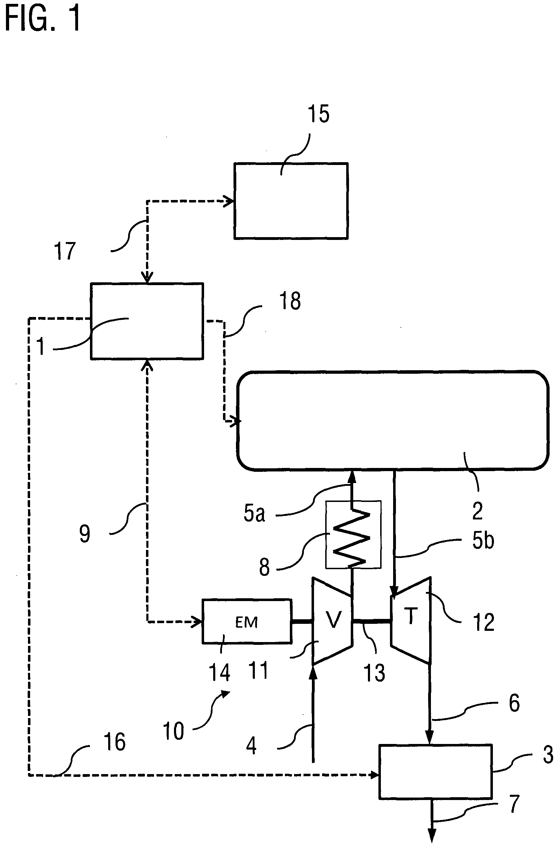

In Figur 1 ist in Form eines Blockschaltbildes eine Motorbremsvorrichtung gemäß einer Ausführungsform der Erfindung gezeigt. Die Motorbremsvorrichtung umfasst eine aufgeladene Brennkraftmaschine 2 eines Nutzfahrzeugs und einen ihr zugeordneten elektromotorisch unterstützten Abgasturbolader 10, nachfolgend auch als ATL 10 bezeichnet. Der elektromotorisch unterstützte Abgasturbolader 10 umfasst eine Turbine 12, die von einem Abgas der Brennkraftmaschine 2, das der Turbine über die Abgasleitung 5b zugeführt wird, angetrieben wird. Danach strömt das Abgasgemisch über den Turbinenauslass durch eine Abgasleitung 6, in der eine an sich bekannte Motorstauklappe 3 angeordnet ist, über eine weitere Abgasleitung 7 zum Auspuff. Die Turbine 12 ist durch eine Welle 13 mit einem Verdichter 11 verbunden. Dem Verdichter 11 wird über den Verdichtereinlass 4 Frischluft zugeführt. Der Verdichter 11 verdichtet die der Brennkraftmaschine 2 zuzuführende Ladeluft und steigert somit die Leistung der Brennkraftmaschine 2 im normalen befeuerten Betrieb. Die durch den Verdichter 11 verdichtete Ladeluft wird über eine Ladeluftleitung einem Ladeluftkühler 8 zugeführt und anschließend über die Leitung 5a in die Brennkraftmaschine 2 eingespeist.

Der ATL 10 ist als elektromotorisch unterstützter Abgasturbolader ausgeführt. Der ATL 10 ist hierzu mit einer motorisch und generatorisch betreibbaren elektrischen Maschine 14 versehen, die drehmomentübertragend mit der Antriebswelle 13 koppelbar bzw. gekoppelt ist und zum Antrieb bzw. zur Antriebsunterstützung des Läufers 11, 12, 13 des Abgasturboladers vorgesehen ist.

Der motorische und generatorische Betrieb der elektrischen Maschine 14, z. B. eines Elektromotors, wird von einer Steuervorrichtung 1 gesteuert, die hierzu über elektrische Leitungen mit dem Elektromotor 14 und mit einem Energiespeicher 15 für elektrische Energie, z. B. einer Starterbatterie oder einer Hochvoltbatterie eines hybridisierten Antriebsstrangs, verbunden ist, was durch die gepunkteten Linien 9 und 17 schematisch dargestellt ist. Für den motorischen Betrieb der elektrischen Maschine 14 wird dieser Energie von dem Energiespeicher 15 zugeführt. Der im generatorischen Betrieb der elektrischen Maschine 14 erzeugte Strom kann ferner über die Steuervorrichtung 1 dem Energiespeicher 15 zugeführt werden. Die Steuervorrichtung 1 ist im vorliegenden Ausführungsbeispiel ferner als Motorsteuerung ausgeführt und kann beispielsweise zum Einleiten eines Motorbremsbetriebs die Brennkraftmaschine 2 über die Steuerleitung 18 auf einen nichtbefeuerten Betrieb umschalten und die Kraftstoffzufuhr zur Brennkraftmaschine 2 unterbrechen oder auf Leerlaufförderung umstellen.

Die Steuervorrichtung 1 ist ferner eingerichtet, den Betrieb der Motorstauklappe 3 zu steuern, was durch die elektrische Leitung 16 dargestellt ist.

Eine Besonderheit der erfindungsgemäßen Lehre liegt darin, dass die Steuervorrichtung 1 ferner eingerichtet ist, die Motorbremsleistung des Kraftfahrzeugs durch Ansteuerung des ATLs 10 zu steuern und zu modulieren.

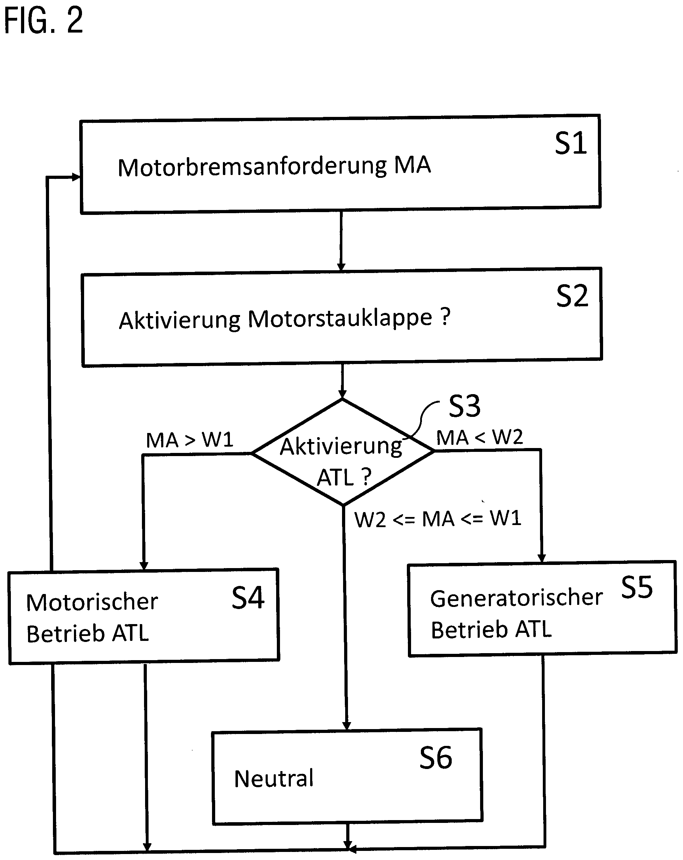

Der entsprechende Betrieb und das korrespondierende Motorbremsverfahren sind beispielhaft in dem Ablaufdiagramm der Figur 2 illustriert. In einem ersten Schritt S1 empfängt die Steuervorrichtung 1 zunächst in an sich bekannter Weise eine Motorbremsleistungsanforderung MA. Die Motorbremsleistungsanforderung MA wird von einem im Fahrerhaus angeordneten Betätigungselement erzeugt, mit dem der Fahrer im Motorbremsbetrieb die Bremsleistung in Stufen vorwählen kann, oder sie wird vom einem Brems-Tempomaten erzeugt, der das Fahrzeug auf eine Sollgeschwindigkeit regelt.

In Schritt S2 prüft die Steuervorrichtung 1, ob in Abhängigkeit von der Motorbremsleistungsanforderung MA eine Aktivierung der Motorstauklappe im Motorschubbetrieb erforderlich ist. Bei hohen Motorbremsleistungsanforderungen aktiviert die Steuervorrichtung 1 in an sich bekannter Weise die Motorstauklappe 3 über die Steuerleitung 16 und steuert die Motorstauklappe 3 so an, dass sich in Abhängigkeit von der Höhe der Motorbremsleistungsanforderung MA ein entsprechender Anstellwinkel der Motorstauklappe 3 einstellt.

In Schritt S3 prüft die Steuervorrichtung 1 ferner, ob in Abhängigkeit von der Motorbremsleistungsanforderung MA ein motorischer oder ein generatorischer Betrieb der elektrischen Maschine 14 des ATLs 10 erforderlich ist.

Ist die Motorbremsleistungsanforderung MA hoch, d. h. z. B. größer als ein erster Schwellenwert W1, wird nachfolgend Schritt S4 ausgeführt, in dem die Steuervorrichtung 1 einen motorischen Betrieb der elektrischen Maschine 14 startet. Der mit der Antriebswelle 13 des Läufers bewegungsgekoppelte Elektromotor 14 beschleunigt so den Läufer 11, 12, 13 des ATLs 10, wodurch sich der Ladedruck in den Zylindern der Brennkraftmaschine 2 und folglich die im Schubbetrieb zu verrichtende Arbeit erhöht. Folglich steigt die Motorbremsleistung durch den motorischen Betrieb des ATLs 10.

Ist die Motorbremsleistungsanforderung MA kleiner als ein zweiter Schwellenwert W2, wird nachfolgend Schritt S5 ausgeführt, in dem die Steuervorrichtung 1 einen generatorischen Betrieb der elektrischen Maschine 14 startet. Die elektrische Maschine 14 bremst daraufhin den Läufer 11, 12, 13 ab, wodurch sich der Ladedruck in den Zylindern der Brennkraftmaschine 2 und folglich die im Schubbetrieb zu verrichtende Arbeit erniedrigt. Folglich sinkt die Motorbremsleistung durch den generatorischen Betrieb des ATLs 10.

In den Schritten S4 und S5 kann beispielsweise eine vorab experimentell bestimmte und in der Steuervorrichtung 1 hinterlegte Kennlinie verwendet werden, die einer Motorbremsleistungsanforderung MA eine Drehzahl des Läufers 11, 12, 13 zuordnet, so dass die Steuervorrichtung den Elektromotor 14 so ansteuert, dass sich die Ist-Drehzahl des Läufers 11, 12, 13 auf die Solldrehzahl einregelt, die sich in Abhängigkeit von der aktuellen Motorbremsleistungsanforderung MA gemäß Kennlinie ergibt.

Ist die Motorbremsleistungsanforderung MA größer gleich W2 und kleiner gleich W1, wird nachfolgend Schritt S6 ausgeführt, in dem die elektrische Maschine 14 nicht aktiviert wird. Die Drehzahl des Läufers 11, 12, 13 ergibt sich aus dem thermodynamischen Gleichgewicht. Die Werte W2 und W1 können die untere und die obere Motorbremsleistung angeben, die nur mit Hilfe der Motorstauklappe 3 erreicht werden kann, so dass der Elektromotor nur unterstützend zur Vergrößerung der Betriebsgrenzen eingesetzt wird.

Der Steuerkreis fährt nachfolgend mit dem Schritt 1 fort, wodurch sich der Steuerkreis schließt.

Eine weitere Möglichkeit besteht darin, die Werte W1 und W2 gleichzusetzen, falls z. B. keine Motorstauklappe verwendet wird oder falls die elektrische Maschine 14 im Motorbremsbetrieb immer unterstützend eingesetzt werden soll, weil dadurch z. B. ein schnellerer Aufbau der gewünschten Motorbremsleistung erreicht werden kann und weil im generatorischen Betrieb Bremsenergie rekuperiert werden kann.

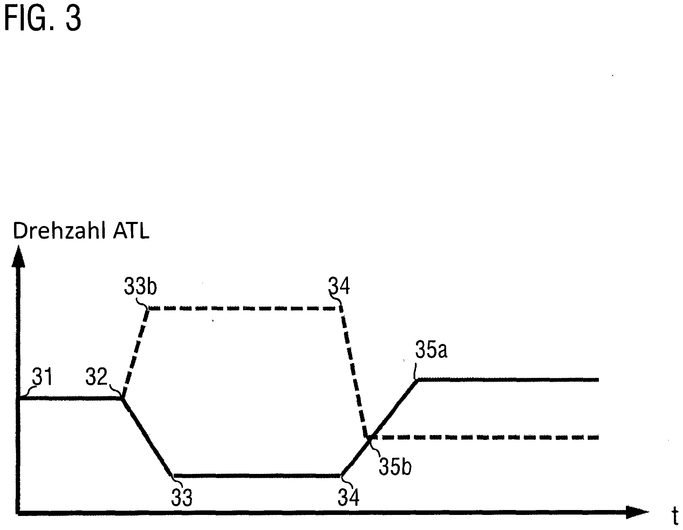

Figur 3 illustriert den Verlauf der Drehzahl des ATLs im Motorbremsbetrieb gemäß einer Ausführungsform der Erfindung, dargestellt durch die gestrichelte Linie, im Vergleich zu einem Verlauf der Drehzahl des ATLs gemäß einem herkömmlichen Motorbremsverfahren mit einer Motorstauklappe, dargestellt durch die durchgezogene Linie.

Zunächst wird der ATL-Drehzahlverlauf eines herkömmlichen Motorbremsverfahrens mit einer Motorstauklappe beschrieben. Der Abgasturbolader ist nicht mit einem Elektromotor gekoppelt oder wird im Motorbremsbetrieb zumindest nicht vom Elektromotor beschleunigt oder abgebremst.

In der Zeit zwischen den Zeitpunkten 31 und 32 befindet sich der Motor im Schubbetrieb. Die Drehzahl des ATL-Läufers stellt sich aufgrund des thermodynamischen Leistungsgleichgewichts zwischen Verdichter und Turbine ein, bedingt durch die Abgasenergie des Motors.

Am Zeitpunkt 32 wird aufgrund einer hohen Bremsleistungsanforderung die Motorstauklappe aktiviert. Dadurch baut sich im Abgastrakt ein Abgasstaudruck auf, wodurch sich die ATL-Drehzahl zwischen den Zeitpunkten 32 und 33 verringert, bis sich ein neues thermodynamisches Leistungsgleichgewicht eingestellt hat. Auf diesem Drehzahl-Niveau verbleibt der ATL, bis im Zeitpunkt 4 eine geringere Motorbremsleistung angefordert wird, so dass die Motorstauklappe deaktiviert wird. Daraufhin nimmt die ATL-Drehzahl wieder bis zum Zeitpunkt 35a zu, an dem sich ein neues aktuelles thermodynamisches Leistungsgleichgewicht eingestellt hat.

Im Unterschied zu diesem herkömmlichen Motorbremsverfahren wird bei einem Motorbremsverfahren gemäß einer Ausführungsform der Erfindung im Zeitpunkt 32 nach Erhalt einer hohen Motorbremsleistungsanforderung nicht nur die Motorstauklappe aktiviert, sondern ferner ein motorischer Betrieb der elektrischen Maschine 14 gestartet, wodurch der Läufer des ATLs 10 beschleunigt wird, so dass die ATL-Drehzahl zwischen den Zeitpunkten 32 und 33b zunimmt, wodurch schnell eine hohe Bremsleistung aufgebaut werden kann. Zwischen den Zeitpunkten steuert die Steuervorrichtung 1 die Drehzahl des Läufers so an, dass diese auf einem konstanten Niveau verbleibt, das die angeforderte Motorbremsleistung erzeugt.

Im Zeitpunkt 34 wird eine geringere Bremsleistungsanforderung gestellt. Daraufhin wird die elektrische Maschine 14 im generatorischen Betrieb betrieben, so dass sich die ATL-Drehzahl schnell bis zum Zeitpunkt 35b auf ein gewünschtes Niveau abgesenkt hat, das die nunmehr angeforderte verringerte Bremsleistung erzeugt. Im generatorischen Betrieb wird ferner ein Teil der Bewegungsenergie des ATL-Läufers in Form von elektrischer Energie rekuperiert. Ferner kann der Anstellwinkel der Motorstauklappe an die geänderte Motorbremsanforderung angepasst werden.

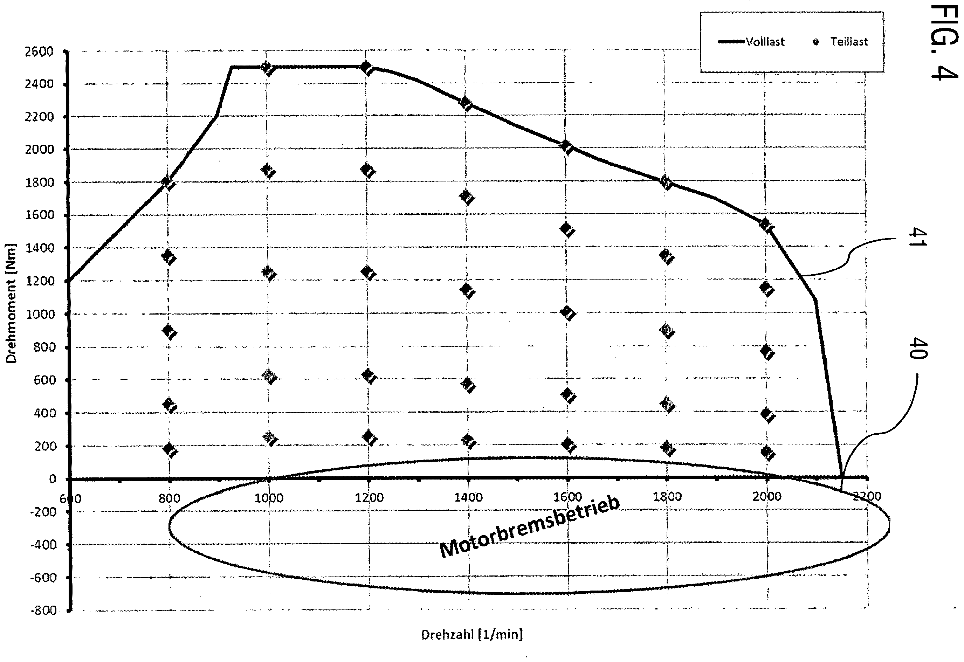

Figur 4 zeigt ein Motorbetriebskennfeld. Die mit dem Bezugszeichen 41 gekennzeichnete Kurve stellt die Volllastbegrenzungskurve des Motorbetriebskennfelds dar. Der Bereich von Betriebspunkten, die von der mit 40 gekennzeichneten Linie umgeben sind, stellen für einen beispielhaften Nutzfahrzeugmotor Betriebspunkte im Motorbremsbetrieb dar. Die von der Brennkraftmaschine 2 erzeugten Drehmomente sind im Motorbremsbetrieb negativ und bremsen das Fahrzeug ab.

### Bezugszeichenliste

- 1: Steuervorrichtung
- 2: Brennkraftmaschine
- 3: Motorstauklappe
- 4: Verdichtereinlassleitung
- 5a: Verdichterauslassleitung bzw. Ladeluftleitung
- 5b: Turbineneinlassleitung
- 6: Turbinenauslassleitung
- 7: Abgasleitung zum Auspuff
- 8: Ladeluftkühler
- 9: Elektrische Leitung
- 10: Abgasturbolader
- 11: Verdichter
- 12: Turbine
- 13: Antriebswelle
- 14: Elektrische Maschine
- 15: Speicher für elektrische Energie
- 16: Steuerleitung
- 17: Elektrische Leitung
- 18: Steuerleitung
- 40: Motorbremsbetrieb
- 41: Volllastbegrenzungskurve des Motorbetriebskennfelds

## Patentansprüche

1. Motorbremsverfahren für eine aufgeladene Brennkraftmaschine mit einem elektromotorisch betreibbaren Abgasturbolader (10), wobei eine Einstellung einer gewünschten bzw. angeforderten Motorbremsleistung durch Beschleunigung eines Läufers (11, 12, 13) des Abgasturboladers (10) durch elektromotorischen Betrieb (S4) des Abgasturboladers erfolgt, **dadurch gekennzeichnet, dass**
die gewünschte bzw. angeforderte Motorbremsleistung von einem im Fahrerhaus angeordneten Betätigungselement, mit dem der Fahrer im Motorbremsbetrieb die Bremsleistung in Stufen vorwählen kann, und/oder von einem Brems-Tempomaten, der das Fahrzeug auf eine Sollgeschwindigkeit regelt, erzeugt wird, und
die Einstellung der gewünschten bzw. angeforderten Motorbremsleistung ferner durch Abbremsen des Läufers (11, 12, 13) durch generatorischen Betrieb (S5) des Abgasturboladers (10) erfolgt, wobei
a) die Beschleunigung des Läufers des Abgasturboladers durch elektromotorischen Betrieb (S4) des Abgasturboladers zur Erhöhung der Motorbremsleistung erfolgt, falls eine gewünschte bzw. angeforderte Motorbremsleistung (MA) einen vorbestimmten ersten Schwellenwert überschreitet; und
b) das Abbremsen des Läufers durch generatorischen Betrieb (S5) des Abgasturboladers zur Reduzierung der Motorbremsleistung erfolgt, falls eine gewünschte bzw. angeforderte Motorbremsleistung (MA) einen vorbestimmten zweiten Schwellenwert unterschreitet.

2. Motorbremsverfahren nach Anspruch 1, **dadurch gekennzeichnet,**
a) **dass** ein definierter Aufbau einer Motorbremsleistung durch eine entsprechende Ansteuerung des elektromotorischen Betriebs des Abgasturboladers gesteuert wird; und/oder
b) **dass** die Stärke des elektromotorischen Betriebs des Abgasturboladers proportional zur aktuell angeforderten Motorbremsleistung variiert wird, falls diese den vorbestimmten Schwellenwert überschreitet.

3. Motorbremsverfahren nach Anspruch 1 oder 2, **dadurch gekennzeichnet,**
**dass** ferner eine im Abgasstrang angeordnete Motorstauklappe (3) angeordnet ist, die im Motorbremsbetrieb aktiviert wird, wobei zur Einstellung einer gewünschten bzw. angeforderten Motorbremsleistung ferner ein Anstellwinkel der Motorstauklappe (3) festgelegt wird.

4. Motorbremsverfahren nach einem der vorhergehenden Ansprüche, **dadurch gekennzeichnet, dass** die Motorbremsenergie in Form von elektrischer Energie teilweise rekuperiert wird, indem die beim Abbremsen des Läufers (11, 12, 13) durch generatorischen Betrieb des Abgasturboladers (10) rekuperierte elektrische Energie in ein Fahrzeugbordnetz und/oder einen elektrischen Energiespeicher (15) des Fahrzeugs eingespeist wird.

5. Motorbremsverfahren nach einem der vorhergehenden Ansprüche, **dadurch gekennzeichnet,**
a) **dass** der elektromotorisch betreibbare Abgasturbolader (10) ein Abgasturbolader ist, der mit einer elektrischen Maschine (14) gekoppelt ist, die zum Antrieb bzw. zur Antriebsunterstützung des Abgasturboladers vorgesehen ist und/oder die vom Abgasturbolader generatorisch betrieben werden kann; und/oder
b) **dass** der Läufer (11, 12, 13) des Abgasturboladers aus einer Abgasturbine (12), einem Verdichter (11) und einer Antriebswelle (13) gebildet ist, wobei die Abgasturbine (12) und der Verdichter (11) über die Antriebswelle (13) bewegungsgekoppelt sind.

6. Vorrichtung (1) zur Modulation einer Motorbremsleistung eines Kraftfahrzeugs mit aufgeladener Brennkraftmaschine, die eingerichtet ist, das Verfahren gemäß der Schritte von Anspruch 1 durchzuführen.

7. Kraftfahrzeug, insbesondere Nutzfahrzeug, mit einer Vorrichtung (1) nach Anspruch 6.

## Claims

1. Engine braking method for a pressure-charged combustion engine having an exhaust turbocharger (10) which can be operated by electric motor, wherein setting of a desired or demanded engine braking power is accomplished by accelerating a rotor (11, 12, 13) of the exhaust turbocharger (10) by electric-motor operation (S4) of the exhaust turbocharger **characterized**
**in that** the desired or demanded engine braking power is produced by an actuating element arranged in the driver's cab, by means of which the driver can preselect the braking power in steps in the engine braking mode, and/or by a braking-cruise controller, which adjusts the vehicle to a setpoint speed, and the setting of the of the desired or demanded engine braking power is furthermore accomplished by braking the rotor (11, 12, 13) by generator-type operation (S5) of the exhaust turbocharger (10), wherein
a) acceleration of the rotor of the exhaust turbocharger by electric-motor operation (S4) of the exhaust turbocharger is effected to increase the engine braking power if a desired or demanded engine braking power (MA) exceeds a predetermined first threshold value; and
b) braking the rotor by generator-type operation (S5) of the exhaust turbocharger is effected to reduce the engine braking power if a desired or demanded engine braking power (MA) undershoots a predetermined second threshold value.

2. Engine braking method according to Claim 1, **characterized**
a) **in that** a defined buildup of engine braking power is controlled by corresponding control of the electric-motor operation of the exhaust turbocharger; and/or
b) **in that** the intensity of electric-motor operation of the exhaust turbocharger is varied in proportion to the presently demanded engine braking power if the latter exceeds the predetermined threshold value.

3. Engine braking method according to Claim 1 or 2, **characterized**
**in that** an engine braking flap (3), which is arranged in the exhaust line and is activated in the engine braking mode, is furthermore provided, wherein an angle of incidence of the engine braking flap (3) is furthermore defined in order to set a desired or demanded engine braking power.

4. Engine braking method according to one of the preceding claims, **characterized in that** the engine braking energy is partially recovered in the form of electrical energy by feeding the electrical energy recovered during the braking of the rotor (11, 12, 13) by generator-type operation of the exhaust turbocharger (10) into an on-board electrical system and/or an electrical energy storage device (15) of the vehicle.

5. Engine braking method according to one of the preceding claims, **characterized**
(a) **in that** the exhaust turbocharger (10) which can be operated by electric motor is an exhaust turbocharger which is coupled to an electric machine (14), which is provided to drive or assist the driving of the exhaust turbocharger and/or which can be operated as a generator by the exhaust turbocharger; and/or
(b) **in that** the rotor (11, 12, 13) of the exhaust turbocharger is formed by an exhaust turbine (12), a compressor (11) and a drive shaft (13), wherein the exhaust turbine (12) and the compressor (11) are coupled in terms of motion by the drive shaft (13).

6. Device (1) for modulating the engine braking power of a motor vehicle having a pressure-charged combustion engine, which is designed to carry out the method according to the steps of Claim 1.

7. Motor vehicle, in particular commercial vehicle, having a device (1) according to Claim 6.

## Revendications

1. Procédé de freinage de moteur destiné à un moteur à combustion interne suralimenté comprenant un turbocompresseur à gaz d'échappement pouvant fonctionner en moteur électrique (10), la puissance de freinage de moteur souhaitée ou demandée étant réglée par accélération d'un rotor (11, 12, 13) du turbocompresseur à gaz d'échappement (10) par un fonctionnement électromoteur (S4) du turbocompresseur à gaz d'échappement, **caractérisé en ce que**
la puissance de freinage de moteur souhaitée ou demandée est générée par un élément d'actionnement, qui est disposé dans la cabine du conducteur et au moyen duquel le conducteur peut présélectionner la puissance de freinage par paliers pendant le freinage du moteur, et/ou par un régulateur de vitesse de freinage qui règle le véhicule à une vitesse de consigne, et
la puissance de freinage de moteur souhaitée ou demandée est également réglée par freinage du rotor (11, 12, 13) par un fonctionnement en générateur (S5) du turbocompresseur à gaz d'échappement (10),
a) l'accélération du rotor du turbocompresseur à gaz d'échappement étant effectuée par un fonctionnement électromoteur (S4) du turbocompresseur à gaz d'échappement pour augmenter la puissance de freinage du moteur si une puissance de freinage de moteur souhaitée ou demandée (MA) devient supérieure à un premier seuil prédéterminé ; et
b) le freinage du rotor étant effectué par un fonctionnement en générateur (S5) du turbocompresseur à gaz d'échappement afin de réduire la puissance de freinage du moteur si une puissance de freinage de moteur souhaitée ou demandée (MA) devient inférieure à un deuxième seuil prédéterminé.

2. Procédé de freinage de moteur selon la revendication 1, **caractérisé en ce que**
a) une constitution définie de la puissance de freinage de moteur est commandée par une commande correspondante du fonctionnement électromoteur du turbocompresseur à gaz d'échappement ; et/ou
b) l'amplitude du fonctionnement électromoteur du turbocompresseur à gaz d'échappement varie proportionnellement à la puissance de freinage de moteur actuellement demandée si celle-ci dépasse le seuil prédéterminé.

3. Procédé de freinage de moteur selon la revendication 1 ou 2, **caractérisé en ce que** un volet de retenue, disposé dans la conduite de conduite d'échappement (3), est en outre prévu qui est activé pendant le freinage de moteur, un angle de réglage du volet de retenue (3) du moteur étant également réglé pour régler la puissance de freinage de moteur souhaitée ou demandée.

4. Procédé de freinage de moteur selon l'une des revendications précédentes, **caractérisé en ce que** l'énergie de freinage de moteur est partiellement récupérée sous forme d'énergie électrique par injection de l'énergie électrique, récupérée par un fonctionnement en générateur du turbocompresseur à gaz d'échappement (10) lors du freinage du rotor (11, 12, 13), dans le réseau de bord du véhicule et/ou dans un accumulateur d'énergie électrique (15) du véhicule.

5. Procédé de freinage de moteur selon l'une des revendications précédentes, **caractérisé en ce que**
a) le turbocompresseur à gaz d'échappement (10), pouvant fonctionner en moteur électrique, est un turbocompresseur à gaz d'échappement qui est accouplé à une machine électrique (14) prévue pour entraîner du turbocompresseur à gaz d'échappement, ou venir en appui de l'entraînement de celui-ci, et/ou qui peut fonctionner en générateur par le biais du turbocompresseur à gaz d'échappement ; et/ou
b) le rotor (11, 12, 13) du turbocompresseur à gaz d'échappement est formé d'une turbine à gaz d'échappement (12), d'un compresseur (11) et d'un arbre d'entraînement (13), la turbine à gaz d'échappement (12) et le compresseur (11) étant accouplés cinématiquement par l'arbre d'entraînement (13).

6. Dispositif (1) de modulation d'une puissance de freinage de moteur d'un véhicule automobile équipé d'un moteur à combustion interne suralimenté, lequel dispositif est adapté pour mettre en oeuvre le procédé selon les étapes de la revendication 1.

7. Véhicule automobile, en particulier véhicule utilitaire, comprenant un dispositif (1) selon la revendication 6.
